# EUROPÄISCHE PATENTSCHRIFT

(11) **EP 3 363 924 B1**
(45) Veröffentlichungstag und Bekanntmachung des Hinweises auf die Patenterteilung: **10.04.2019**
(21) Anmeldenummer: 17156731.6
(22) Anmeldetag: 17.02.2017
(51) Int. Cl.: C22C 21/14, C22C 21/16, F16B 25/00

(54) **ALUMINIUMLEGIERUNG**
ALUMINIUM ALLOY
ALLIAGE D'ALUMINIUM

(43) Veröffentlichungstag der Anmeldung: 22.08.2018
(73) Patentinhaber: Drahtwerk Elisental W. Erdmann GmbH & Co., 58809 Neuenrade (DE)
(72) Erfinder: Wingen, Theodor, 58809 Neuenrade (DE); Druskus, Janina, 58511 Lüdenscheid (DE)
(74) Vertreter: Patentanwälte Dörner & Kötter PartG mbB

(56) Entgegenhaltungen:
- US-A- 3 984 260
- Isao Iwayima ET AL: "AUTOMOTIVE 74 . 6056 Aluminum Alloy Wire for Automotive Fasteners", SEI TECHNICAL REVIEW, 1. Oktober 2013 (2013-10-01), Seiten 74-78, XP055391532, Gefunden im Internet: URL:http://global-sei.com/technology/tr/bn 77/pdf/77-13.pdf [gefunden am 2017-07-17]
- SPIEKERMANN P: "LEGIERUNGEN - EIN BESONDERES PATENTRECHTLICHES PROBLEM? - LEGIERUNGSPRUEFUNG IM EUROPAEISCHEN PATENTAMT -", MITTEILUNGEN DER DEUTSCHEN PATENTANWAELTE, HEYMANN, KOLN, DE, 1. Januar 1993 (1993-01-01), Seiten 178-190, XP000961882, ISSN: 0026-6884

## Beschreibung

Die Erfindung betrifft eine Aluminiumlegierung zur Drahtherstellung für die Kaltumformung, insbesondere zur Herstellung von Verbindungselementen, nach dem Patentanspruch 1.

Im Automobilbereich hat die Gewichtsreduzierung von Bauteilen einen hohen Stellenwert, da das Gewicht eines Automobils unmittelbaren Einfluss auf Kraftstoffverbrauch und CO₂-Ausstoß hat. Ein Schwerpunkt liegt hier auf der Verwendung von Leichtmetallen, wie Aluminium und Magnesium. Als Verbindungselement für aus diesen Metallen hergestellte Bauteile, insbesondere zur Verbindung von Gehäusebauteilen kommen Aluminiumschrauben zum Einsatz. Der Vorteil der Verwendung gleichartiger Verbindungselemente liegt nicht allein in der Gewichtsersparnis in Vergleich zu Stahlschrauben; vielmehr ergeben sich besondere Vorteile durch das geringere Korrosionspotential sowie die epitaktische Ausdehnung von Verbindungselement und Bauteil im Betrieb. Aluminiumlegierungen und ihre chemische Zusammensetzung sind in der DIN EN 573-3 aufgeführt.

Als Kompromiss hinsichtlich Umformbarkeit, Festigkeit und Korrosionsstabilität wird für die Herstellung von Aluminiumschrauben eine Aluminiumlegierung gemäß EN AW-6056 (Al Si1MgCuMn) verwendet. Als nachteilig hat sich bei dieser Aluminiumlegierung jedoch erwiesen, dass diese nur eine beschränkte Temperaturbeständigkeit aufweist. Daher sind aus dieser Legierung gefertigte Verbindungselemente nur in Temperaturbereichen bis zu 150°C einsetzbar, bspw. zur Verschraubung der Ölwanne oder des Getriebegehäuses. Für Bereiche, in denen höhere Temperaturen auftreten, insbesondere im Motorbereich, wo Temperaturen von 180°C und höher vorherrschen, sind aus dieser Legierung hergestellte Verbindungselemente nicht geeignet. Zusätzlich weisen diese Legierungen mechanische Kenngrößen auf, die für zahlreiche Anwendungen im Automobilbereich nicht ausreichend sind. Daher kommen beispielsweise zur Verschraubung des Zylinderkopfes weiterhin Stahlschrauben zum Einsatz, obwohl der Motorblock regelmäßig aus Leichtmetall hergestellt ist.

Im Bereich der Luft- und Raumfahrt kommen Verbindungselemente zum Einsatz, die aus einer Aluminiumlegierung gemäß EN AW-2024 (Al Cu4Mg1) hergestellt sind. Hierbei handelt es sich um hochfeste Legierungen, die durch Ausscheiden der Al₂Cu-Phasen durch eine effektive Ausscheidungshärtung Zugfestigkeiten bis zu Rₘ= 570 MPa ermöglichen. Die Drahtherstellung aus dieser Legierung gestaltet sich jedoch sehr aufwendig.

Ausgehend von dem zuvor beschriebenen Stand der Technik liegt der vorliegenden Erfindung die Aufgabe zugrunde, eine Aluminiumlegierung zur Verfügung zu stellen, die eine hohe Festigkeit und Korrosionsbeständigkeit aufweist, eine wirtschaftliche Drahtherstellung ermöglicht und die zur Herstellung von Verbindungselementen zum Einsatz in Temperaturbereichen von 180°C und höher geeignet ist.

Gemäß der Erfindung wird diese Aufgabe durch eine Aluminiumlegierung nach dem Patentanspruch 1.

Dadurch, dass Magnesium mit einem Legierungsanteil von zwischen 1,5 Massen-% und 2,2 Massen-% enthalten ist, wird eine gute Grundfestigkeit der Legierung bewirkt, die durch die Zugabe des weiteren Legierungsbestandteils Nickel sehr gute Festigkeitseigenschaften der Legierung bewirkt.

Mangan und Titan sind weitere Legierungsbestandteile. Dabei wirkt sich Mangan positiv auf die Wärmebeständigkeit der Legierung aus, während Titan kornfeinend wirkt, wodurch die Umformfähigkeit verbessert wird.

Gegenstand der vorliegenden Erfindung ist weiterhin ein Draht aus einer solchen Legierung nach dem Patentanspruch 2 sowie auch ein Verbindungsmittel, hergestellt aus einer solchen Legierung nach dem Patentanspruch 3.

Ein Ausführungsbeispiel der Erfindung wird nachfolgend im Einzelnen beschrieben:
Die als Ausführungsbeispiel gewählte Legierung umfasst die nachfolgende Zusammensetzung:

| Legierungselemente | Massen-% |
|---|---|
| Silizium (Si) | 0,65 |
| Eisen (Fe) | 0,09 |
| Kupfer (Cu) | 5,72 |
| Mangan (Mn) | 0,48 |
| Magnesium (Mg) | 1,83 |
| Chrom (Cr) | 0,11 |
| Nickel (Ni) | 0,8 |
| Zink (Zn) | 0,19 |
| Titan (Ti) | 0,15 |

Sonstige Beimengungen überschreiten einzeln nicht 0,05% und insgesamt nicht 0,15%.

Ein Gießwalzdraht auf Basis einer Legierung gemäß diesem Ausführungsbeispiel ermöglicht einen wirtschaftlichen Drahtziehprozess, in dem der Draht auf den gewünschten Enddurchmesser gezogen wird. Dieser Draht ermöglicht wiederum eine wirtschaftliche Herstellung von Verbindungsmitteln, insbesondere von Schrauben. Aufgrund der verbesserten Eigenschaften der Legierung weisen auf Basis dieses Drahtes hergestellte kaltumgeformte Schrauben eine hohe mechanische und korrosionstechnische Stabilität bei gleichzeitig hoher Warmfestigkeit auf. Aufgrund ihrer Temperaturbeständigkeit sind solche Verbindungsmittel auch in Temperaturbereichen von 180°C und höher einsetzbar.

## Patentansprüche

1. Aluminiumlegierung zur Drahtherstellung für die Kaltumformung, insbesondere zur Herstellung von Verbindungselementen, bestehend aus
0,4 bis 1,0 Massen-% Silizium,
bis zu 0,2 Massen-% Eisen,
5,0 bis 6,1 Massen-% Kupfer,
bis zu 0,5 Massen-% Mangan,
1,5 bis 2,2 Massen-% Magnesium,
bis zu 0,2 Massen-% Chrom,
0,15 bis 1,0 Massen-% Nickel,
bis zu 0,3 Massen-% Zink,
bis zu 0,25 Massen-% Titan und
Rest Aluminium,
sowie sonstige Beimengungen, die einzeln 0,05 Massen-% und insgesamt 0,15 Massen-% nicht überschreiten dürfen, wobei der Anteil von Aluminium größer 90 Massen-% ist.

2. Draht zur Herstellung von Verbindungselementen, insbesondere von Schrauben, **dadurch gekennzeichnet, dass** dieser aus einer Aluminiumlegierung nach Anspruch 1 hergestellt ist.

3. Verbindungselement, insbesondere Schraube, **dadurch gekennzeichnet, dass** dieses aus einer Aluminiumlegierung nach Anspruch 1 hergestellt ist.

## Claims

1. Aluminium alloy for the wire production for cold forming, particularly for the production of connecting elements consisting of
0.4 to 1.0 % by mass of silicon,
up to 0.2 % by mass of iron,
5.0 to 6.1 % by mass of copper,
up to 0.5 % by mass of manganese,
1.5 to 2.2 % by mass of magnesium,
up to 0.2 % by mass of chromium,
0.15 to 1.0 % by mass of nickel,
up to 0.3 % by mass of zinc,
up to 0.25 % by mass of titanium and
remainder aluminium,
as well as other additives, which may not exceed 0.05 % by mass individually and 0.15 % by mass in total, wherein the proportion of aluminium is greater than 90% by mass.

2. Wire for the production of connecting elements, particularly of screws, **characterised in that** it is made of an aluminium alloy according to claim 1.

3. Connecting element, particularly screw, **characterised in that** it is made of an aluminium alloy according to claim 1.

## Revendications

1. Alliage d'aluminium pour la fabrication de fil destiné à la déformation à froid, en particulier pour fabriquer des éléments de liaison, composé de
0,4 à 1,0 % en masse de silicium,
jusqu'à 0,2 % en masse de fer,
5,0 à 6,1 % en masse de cuivre,
jusqu'à 0,5 % en masse de manganèse,
de 1,5 à 2,2 % en masse de magnésium,
jusqu'à 0,2 en masse de chrome,
de 0,15 à 1,0 % en masse de nickel,
jusqu'à 0,3 % en masse de zinc,
jusqu'à 0,25 % en masse de titane,
le reste étant de l'aluminium,
ainsi que d'additifs divers qui ne doivent pas dépasser individuellement 0,05 % en masse et ensemble 0,15 % en masse, sachant que la part d'aluminium est supérieure à 90 % en masse.

2. Fil destiné à la fabrication d'éléments de liaison, en particulier de vis, **caractérisé en ce que** ce fil est fabriqué à partir d'un alliage d'aluminium selon la revendication 1.

3. Élément de liaison, en particulier une vis, **caractérisé en ce que** cet élément est fabriqué à partir d'un alliage d'aluminium selon la revendication 1.
